# FASCICULE DE BREVET EUROPEEN

(11) **EP 2 739 465 B1**
(45) Date de publication et mention de la délivrance du brevet: **18.10.2017**
(21) Numéro de dépôt: 12742902.5
(22) Date de dépôt: 01.08.2012
(51) Int. Cl.: G21C 3/07, G21C 3/10, G21C 21/02, B32B 1/08, B32B 9/00, B32B 9/04, C04B 37/02

(54) **GAINE DE COMBUSTIBLE NUCLEAIRE EN MATERIAU COMPOSITE A MATRICE CERAMIQUE ET PROCEDE DE FABRICATION ASSOCIE**
KERNBRENNSTOFFHÜLLE AUS EINEM KERAMIKMATRIX-VERBUNDSTOFFMATERIAL UND HERSTELLUNGSVERFAHREN DAFÜR
NUCLEAR FUEL CLADDING MADE FROM CERAMIC-MATRIX COMPOSITE MATERIAL AND ASSOCIATED PRODUCTION METHOD

(30) Priorité: 01.08.2011 FR 1157042
(43) Date de publication de la demande: 11.06.2014
(73) Titulaire: Commissariat à l'Énergie Atomique et aux Énergies Alternatives, 75015 Paris (FR)
(72) Inventeur: ZABIEGO, Maxime, F-04860 Pierrevert (FR); SAUDER, Cédric, F-78730 Saint Arnoult en Yvelines (FR); LORRETTE, Christophe, F-33140 Villenave d'Ornon (FR); GUEDENEY, Philippe, F-04100 Manosque (FR)
(74) Mandataire: Ahner, Philippe
(86) Numéro de dépôt international: PCT/EP2012/065035
(87) Numéro de publication internationale: WO 2013/017621

(56) Documents cités:
- JP-A- H05 232 289
- US-A- 4 228 826
- US-A- 5 434 896
- US-A1- 2006 039 524
- US-A1- 2009 101 658
- US-A1- 2009 220 040
- US-A1- 2010 263 195

## Description

### DOMAINE TECHNIQUE

La présente invention se rapporte au domaine des pièces en matériau composite à matrice céramique. En particulier, la présente invention se rapporte au domaine des éléments combustibles pour réacteur nucléaire et, plus particulièrement, à une gaine de combustible nucléaire améliorée, aux crayons combustibles de réacteur nucléaire utilisant de telles gaines et à leurs procédés de réalisation.

Une telle gaine de combustible améliorée peut, à titre d'exemple, être utilisée pour réaliser les éléments combustibles à géométrie « aiguille » (également appelés « crayons ») des réacteurs de quatrième génération de type RNR-G (pour Réacteur à Neutrons Rapides et caloporteur Gaz).

Elle peut également être utilisée dans d'autres réacteurs nucléaires, comme les réacteurs REP (pour Réacteur à Eau Pressurisée), les réacteurs REB (pour Réacteur à Eau Bouillante) ou encore les réacteurs RNR-Na (pour Réacteur à Neutrons Rapides et caloporteur sodium).

### ÉTAT DE LA TECHNIQUE ANTÉRIEURE

Les matériaux composites à matrice céramique (également appelés matériaux CMC) sont particulièrement appréciés dans de nombreux domaines en raison de leur faible densité, de leurs propriétés mécaniques remarquables, notamment en termes de dureté, de ténacité, de tenue à l'usure et de résistance aux chocs mécaniques et thermiques, ainsi qu'en raison de leur bon comportement sous flux neutronique et à haute température pour des applications dans le domaine nucléaire. Par « haute température », on entend une température au-delà de laquelle le comportement thermomécanique des matériaux usuels (aciers des réacteurs à spectre rapide et alliages de zirconium des réacteurs à spectre thermique) n'est plus satisfaisant. Cela correspond à une température de l'ordre de 400°C à 600°C en régime nominal, et de l'ordre de 1000°C à 1200°C en régime accidentel. Ainsi, par exemple, pour les RNR-G, on vise des températures de fonctionnement atteignant 1000°C en régime nominal, et jusqu'à 1600°C, voire 2000°C, pour les transitoires accidentels.

On rappelle à ce propos qu'un matériau CMC est constitué d'une matrice céramique, qui est renforcée par une structure fibreuse en céramique sur laquelle est déposé un matériau d'interphase dont le rôle principal est de dévier les fissures générées au sein de la matrice lors de sollicitations mécaniques ; la matrice et les fibres peuvent être en tout matériau céramique connu, y compris en carbone (le carbone étant considéré, dans ce contexte, comme un matériau céramique), le matériau d'interphase pouvant quant à lui être du pyrocarbone.

A titre d'exemples, de tels matériaux sont utilisés dans l'aéronautique pour réaliser des disques de freins ou des pièces destinées à entrer dans la réalisation de réacteurs fonctionnant à haute température ; ils entrent également dans la réalisation de pièces pour les turbines à gaz ; ils entrent enfin, et c'est la première application visée dans le cadre de ce brevet, dans la réalisation de matériau de gainage pour les éléments combustibles et les barres de commande des réacteurs nucléaires.

Malgré leurs nombreux avantages, les matériaux CMC présentent cependant un inconvénient majeur : ils ne sont pas hermétiques sur l'ensemble de leur domaine de fonctionnement potentiel. Ainsi, ces matériaux sont inadaptés pour des applications en tant qu'enceinte en pression ou conduite en pression, comme c'est notamment le cas des gainages de combustible nucléaire ou des tubes d'échangeurs thermiques, car ils n'offrent aucune garantie d'herméticité sur l'ensemble de leur domaine de fonctionnement potentiel. Par exemple, pour un élément combustible de réacteur nucléaire, dont le gainage constitue la première barrière de confinement des produits radioactifs générés en fonctionnement, le risque d'un défaut d'herméticité avant démantèlement constitue clairement un inconvénient majeur, ce qui rend, a priori, les matériaux CMC inadaptés pour une telle utilisation et inacceptables par une autorité de sûreté nucléaire.

Le comportement spécifique des matériaux CMC vis-à-vis de l'exigence d'herméticité, qui constitue un enjeu majeur de ce brevet, est clairement illustré par la figure 1. La figure 1 illustre le comportement mécanique d'un matériau CMC de type SiC_{f}/SiC (pour composite à matrice en carbure de silicium renforcé par une structure fibreuse en carbure de silicium) soumis à un essai de traction uniaxiale, dans un diagramme représentant le lien entre déformation (en abscisse) et contrainte (en ordonnée). Cette figure met en évidence le fait que le matériau CMC de type SiC_{f}/SiC qui est ici étudié présente une capacité d'allongement à rupture appréciable, de l'ordre de 0,9% pour une contrainte à rupture de l'ordre de 300 MPa, mais a cependant un domaine d'élasticité linéaire beaucoup plus réduit, avec un allongement de l'ordre de 0,04% et une limite élastique voisine de 80 MPa. Or, au-delà de leur limite d'élasticité, les matériaux CMC sont caractérisés par un mode d'endommagement qualifié de « multi-fissuration matricielle », qui se traduit par l'apparition de nombreuses fissures. Ce mécanisme très singulier permet aux matériaux CMC d'atteindre des niveaux d'allongement à rupture tout à fait remarquables pour une céramique, mais écarte tout espoir auxdits matériaux de conserver une herméticité au-delà de cette limite élastique.

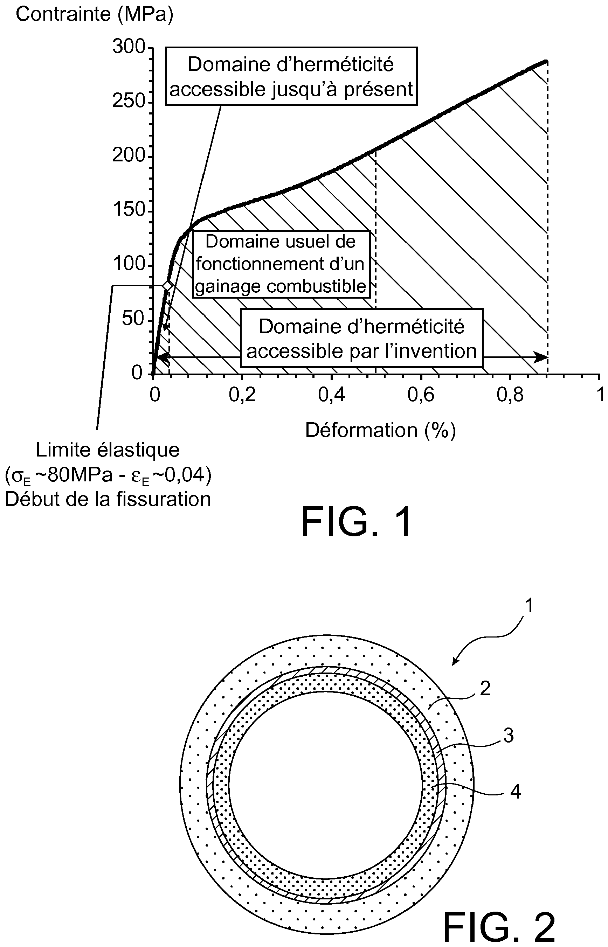

Si on compare les valeurs mentionnées ci-dessus (sur la base de la figure 1) aux conditions de fonctionnement usuellement requises pour un gainage de combustible nucléaire, par exemple des allongements de 0,2 à 0,5% et des contraintes supérieures à 100 MPa, pouvant atteindre jusqu'à 200 MPa dans les conditions de dimensionnement les plus extrêmes, alors il est clair qu'un gainage CMC seul n'est pas à même de satisfaire l'exigence d'herméticité à laquelle il est strictement astreint par les réglementations de sûreté.

Plusieurs travaux disponibles dans la littérature relatent la mise au point de procédés permettant d'étendre le domaine d'herméticité de pièces en composites à matrice céramique.

A titre d'exemples, les documents [1] à [3], dont les références sont disponibles à la fin de cette description, décrivent la fabrication d'une gaine de combustible nucléaire, composée d'un tube en matériau CMC recouvert d'une couche en céramique (pour les documents **[1]** et **[3]**), ou composée d'un tube en matériau CMC pris en sandwich entre une couche interne en céramique et une couche externe en céramique (**[2]**).

Cependant, outre le fait que la réalisation d'une couche monolithique en céramique sur les longueurs usuelles d'une gaine de combustible nucléaire (supérieures à 1 mètre et pouvant atteindre jusqu'à 4 mètres) est particulièrement difficile (le document **[2]** mentionne en effet la réalisation de tronçons qu'il faut ensuite assembler, ce qui constitue un risque de fragilisation du composant final), l'herméticité des gaines décrites dans les documents **[1]** à **[3]** n'est valable que dans le domaine d'élasticité linéaire du multicouche ainsi formé, et en particulier dans le domaine d'élasticité de la céramique utilisée, qui est malheureusement très réduit. En l'occurrence, cela signifie que, si une fissure est initiée au sein du multicouche et plus particulièrement, au sein de la céramique monolithique assurant son herméticité (après un choc ou un endommagement mécanique au-delà de sa résistance élastique linéaire), l'herméticité est perdue, et la gaine se retrouve perméable. Ainsi, si l'on considère par exemple la figure 11 du document **[2],** on note que la défaillance de la céramique monolithique interne, qui assure l'herméticité, se produit au plus tard pour un allongement de l'ordre de 0,2% (correspondant au maximum de la courbe « contrainte versus déformation »). De fait, en dépit de ses performances à rupture, le multicouche proposé dans le document **[2]** n'est pas apte à satisfaire le cahier des charges d'un élément combustible nucléaire, qui nécessite que l'herméticité du gainage soit garantie sur l'ensemble du domaine de fonctionnement, qui s'étend clairement au-delà des 0,2% de déformation.

Il est par ailleurs connu, pour la réalisation de conduites ou d'enceintes en pression (hors du domaine particulier des combustibles nucléaires), d'utiliser une structure en matériau CMC dont l'intérieur est tapissé d'une couche métallique (documents **[4]** et **[5]**). Toutefois, pour une application en tant que gainage d'un élément combustible nucléaire, une telle solution présente divers inconvénients.

De manière générale, le positionnement interne de la couche métallique assurant l'herméticité la rend sensible aux agressions du combustible, à savoir l'implantation, sur une profondeur de l'ordre de 10 micromètres, de produits de fission générés avec des énergies cinétiques élevées en périphérie du combustible, et la corrosion de la couche métallique par réaction thermochimique avec le combustible et/ou les produits de fission.

De manière plus spécifique au cas des réacteurs nucléaires à caloporteur pressurisé (de l'ordre de 70 bars en RNR-G et REB, et de l'ordre de 155 bars en REP), un gainage bicouche (couche CMC assurant la tenue mécanique en externe et couche métallique assurant l'herméticité en interne) présente le risque d'un effondrement de la couche métallique interne, susceptible de résulter de la perte d'herméticité de la couche CMC qui, par sa multi-fissuration, permettrait à la pression externe du caloporteur (qui est a priori supérieure, au moins en début d'irradiation, à la pression interne du gaz de remplissage de l'élément combustible) de s'exercer directement sur la couche métallique interne, entrainant sa déformation excessive, a priori préférentiellement par un mécanisme de type fluage (connu sous le nom de « creep-down » dans le domaine des combustibles nucléaires, où l'origine du fluage est associée aux hautes températures et à l'irradiation neutronique).

Ainsi, l'application de cette solution aux combustibles nucléaires (qui n'a, à notre connaissance, encore jamais été mise en oeuvre), exigerait d'utiliser des épaisseurs importantes pour la couche métallique, ce qui limiterait considérablement le choix du matériau métallique (du fait de l'absorption neutronique des métaux réfractaires).

Au vu de ce qui précède, l'invention a pour but de remédier au moins partiellement aux inconvénients mentionnés ci-dessus, relatifs aux réalisations de l'art antérieur. En particulier, les Inventeurs se sont fixé comme but de concevoir une pièce tubulaire à base de matériau CMC qui ait une herméticité encore davantage améliorée par rapport aux pièces tubulaires de l'art antérieur, cette pièce étant destinée à être utilisée comme gaine de combustible nucléaire. Plus particulièrement, les Inventeurs ont cherché à étendre le domaine d'herméticité d'une pièce tubulaire à base de CMC au-delà de la limite élastique dudit matériau, de préférence jusqu'à rupture dudit matériau CMC. Le document JP H05 232289 A divulgue une gaine de combustible nucléaire comprenant une couche métallique formant un corps tubulaire métallique et une couche en matériau composite à matrice céramique recouvrant la partie interne du corps tubulaire métallique et format un corps tubulaire interne.

### EXPOSÉ DE L'INVENTION

Ce but est atteint par l'invention qui propose, en premier lieu, une gaine de combustible nucléaire pour réacteur nucléaire ayant une à deux extrémités ouvertes et comprenant une couche métallique formant un corps tubulaire métallique et deux couches en matériau composite à matrice céramique, recouvrant le corps tubulaire métallique, la gaine étant caractérisée en ce qu'une des deux couches en matériau composite à matrice céramique recouvre la surface interne du corps tubulaire métallique pour former un corps tubulaire interne, tandis que l'autre des deux couches en matériau composite à matrice céramique recouvre la surface externe du corps tubulaire métallique pour former un corps tubulaire externe, le corps tubulaire métallique se trouvant ainsi pris en sandwich entre les corps tubulaires interne et externe, le corps tubulaire métallique ayant une épaisseur moyenne inférieure aux épaisseurs moyennes des corps tubulaires interne et externe.

Le corps tubulaire métallique peut être en métal ou en alliage de métaux.

On précise que, dans ce qui précède et ce qui suit, un matériau composite à matrice céramique est un matériau à renfort fibreux.

La gaine de combustible nucléaire peut avoir une section en coupe circulaire, ovale, hexagonale, carrée..., les sections en coupe circulaire étant cependant préférées.

On précise que les corps tubulaires interne et externe ne sont pas nécessairement en un même « matériau ». A ce propos, il est important de noter que, comme les corps tubulaires interne et externe sont des CMC, qui sont donc des « structures » (c'est-à-dire une combinaison de matériaux, de géométries et de procédés) plus que des « matériaux », si l'on dit que les corps tubulaires interne et externe sont en un même « matériau », cela signifie qu'ils sont réalisés suivant le même procédé, avec le ou les mêmes types de fibres (même composition chimique, même diamètre), revêtue de la même interphase (même composition chimique, même épaisseur, même procédé de revêtement), entrelacées de la même manière pour former le renfort (tressage 2D, 3D, enroulement filamentaire...) et avec la même matrice (même composition chimique, même procédé d'élaboration). Ainsi, a *contrario,* deux matériaux CMC constitués des mêmes fibres et de la même matrice, mais dont la préforme est réalisée différemment (par exemple, l'une par enroulement filamentaire des fibres et l'autre par tressage 2D des fibres) seront considérés comme deux matériaux différents.

De préférence, le corps tubulaire métallique a une épaisseur moyenne comprise entre 5 % et 20 % de l'épaisseur moyenne de la gaine.

Une gaine selon l'invention peut être soumise à des contraintes d'herméticité jusqu'à de hautes températures et, pour qu'elle puisse conserver son herméticité jusqu'à de hautes températures, les critères de choix du matériau constitutif du corps tubulaire métallique sont :
- une compatibilité avec ces hautes températures (marge à la fusion, absence de transformation allotropique, préservation de propriétés mécaniques satisfaisantes) ; et
- une compatibilité thermochimique avec le matériau CMC constitutif des corps tubulaires interne et externe.

En ce qui concerne les critères de choix du matériau constitutif des corps tubulaires interne et externe, ceux sont les mêmes que ceux retenus pour le corps tubulaire métallique, auxquels on ajoute un critère de compatibilité thermochimique vis-à-vis des milieux (fluides ou solides) destinés à être en contact avec les corps tubulaires interne et externe.

Ainsi, de préférence, le corps tubulaire métallique est en un matériau choisi parmi le niobium et ses alliages, le tantale et ses alliages, le tungstène et ses alliages, le titane et ses alliages. A titre d'exemple, comme alliages du niobium, on peut utiliser du Nb-1Zr ou du Nb-1Zr-0,1C ; comme alliage de tungstène, on peut utiliser le W-5Re. En fait, le choix du matériau métallique est aussi fixé par la contrainte de tenue aux conditions d'élaboration de la gaine. En effet, comme nous le verrons plus loin, le procédé de fabrication proposé selon l'invention impose au matériau métallique choisi de pouvoir résister aux conditions d'élaboration du CMC externe (qui est conçu sur ladite couche métallique), les températures d'élaboration du CMC externe pouvant par exemple atteindre 1000°C.

Les corps tubulaires interne et externe sont, quant à eux, de préférence en composite C_{f}/C, C_{f}/SiC ou SiC_{f/}SiC.

Comme expliqué précédemment, les matériaux CMC ne sont hermétiques que dans un très faible domaine qui correspond au domaine d'élasticité linéaire du matériau CMC en question, car au-delà de cette limite d'élasticité, ils subissent des multi-fissurations. L'agencement particulier des couches de la gaine selon l'invention permet de conserver une herméticité de la gaine jusqu'à rupture des matériaux CMC plutôt que sur leur seul domaine élastique.

Ainsi, si l'on utilise par exemple un composite SiC_{f}/SiC pour les corps tubulaires interne et externe, il est possible, en référence à la figure 1, de conserver une herméticité jusqu'à atteindre la limite d'allongement à rupture du composite SiC_{f}/SiC qui est de l'ordre de 0,9% pour une contrainte à rupture de l'ordre de 300 MPa (le domaine d'herméticité atteignable dans le cadre de l'invention est hachuré).

En fait, la gaine selon l'invention peut assurer une séparation hermétique de deux milieux (fluide ou solide) (l'un étant situé à l'extérieur de la gaine et l'autre étant situé à l'intérieur de la gaine), même lorsqu'il y a un différentiel de pression entre la surface interne et la surface externe de la gaine et que le chargement mécanique qui en résulte provoque une multi-fissuration de l'un ou des deux corps interne et externe. En effet, lorsque les corps tubulaires interne et externe sont fissurés, ils perdent leur herméticité, mais ils conservent leur résistance mécanique. Ils peuvent donc continuer à maintenir l'intégrité mécanique du corps tubulaire métallique, et par voie de conséquence, à maintenir l'intégrité mécanique de la gaine dans son ensemble, et l'herméticité de la gaine repose alors sur le corps tubulaire métallique.

On précise que l'intégrité mécanique du matériau CMC s'entend dans le sens d'une absence de rupture de ce matériau.

Un autre objet de l'invention est une structure tubulaire présentant une cavité fermée.

Cette structure comprend, d'une part, une gaine telle que définie ci-dessus et, d'autre part, au moins un couvercle pour chaque extrémité ouverte de la gaine, chaque couvercle étant positionné au niveau d'une extrémité ouverte de manière à obturer complètement ladite extrémité ouverte, chaque couvercle comprenant une couche interne, en métal ou en alliage de métaux, destinée à être fixée au corps tubulaire métallique de la gaine, et éventuellement une couche supplémentaire, en matériau composite à matrice céramique, destinée à être fixée au corps tubulaire externe de la gaine, la cavité fermée de la structure étant délimitée par une paroi interne de la gaine et par une paroi interne de chaque couvercle.

De préférence, la gaine comprend, au niveau de chaque extrémité ouverte, une zone annulaire dans laquelle le corps tubulaire métallique n'est pas recouvert par le corps tubulaire externe et dans laquelle chaque couvercle est formé d'un fond relié à un bord latéral, ledit bord latéral étant adapté pour recouvrir ladite zone annulaire.

Avantageusement, la cavité fermée de la structure est apte à contenir un combustible nucléaire et les gaz de fission que ce dernier relâche sous irradiation. Dans ce cas, le corps tubulaire métallique a, de préférence, une épaisseur moyenne comprise entre 50 et 200 micromètres.

Pour un gainage d'élément combustible nucléaire, les critères de choix du matériau constitutif du corps tubulaire métallique sont :
- une compatibilité avec l'irradiation (faible section de capture neutronique et préservation de propriétés mécaniques satisfaisantes (c'est-à-dire, garantissant l'absence de défaillance systématique sur le domaine de dimensionnement du réacteur) jusqu'à des doses d'irradiation élevées (supérieures à 50 dpa (déplacements par atome) en spectre thermique et 100 dpa en spectre rapide)) ;
- une compatibilité avec les hautes températures (marge à la fusion, absence de transformation allotropique, préservation de propriétés mécaniques satisfaisantes) ;
- une compatibilité thermochimique avec le matériau CMC constitutif des corps tubulaires interne et externe ;
- une soudabilité permettant la réalisation d'une fermeture hermétique par jonction avec un couvercle aux extrémités ouvertes.

Les critères de choix du matériau constitutif des corps tubulaires interne et externe sont les mêmes que pour le corps tubulaire métallique en matière de compatibilité avec l'irradiation et les hautes températures, tandis que le critère de compatibilité thermochimique se complète d'exigences vis-à-vis des réactions avec le combustible et les produits de fission, pour le corps tubulaire interne, ainsi qu'avec le caloporteur et ses impuretés, pour le corps tubulaire externe.

Ainsi, les matériaux préférés cités ci-dessus pour le corps tubulaire métallique de la gaine, à savoir le niobium et ses alliages, le tantale et ses alliages, le tungstène et ses alliages, le titane et ses alliages, et les matériaux préférés cités ci-dessus pour les corps tubulaires interne et externe, à savoir un composite C/C, C/SiC ou SiC/SiC, conviennent parfaitement.

Un autre objet de l'invention est un élément combustible nucléaire comprenant du combustible nucléaire logé dans la cavité fermée de la structure tubulaire telle que définie ci-dessus. Le combustible nucléaire peut être sous la forme de pastilles de combustible nucléaire (uranium et/ou plutonium et/ou thorium, sous forme d'oxyde, de carbure, de nitrure...) ; l'élément combustible nucléaire peut ainsi être un crayon ou une aiguille.

L'invention concerne également un procédé de fabrication d'une gaine telle que définie ci-dessus, qui comprend les étapes successives suivantes :
a) fourniture d'un corps tubulaire en matériau composite à matrice céramique pour former le corps tubulaire interne ;
b) formation du corps tubulaire métallique sur le corps tubulaire interne ;
c) formation du corps tubulaire externe sur le corps tubulaire métallique, par la mise en oeuvre des étapes successives suivantes :
   - la réalisation d'une préforme fibreuse à base de fibres continues sur la surface externe du corps tubulaire métallique (par tressage de fils, par exemple) ;
   - l'application d'un traitement pour induire la densification de la préforme par formation d'une matrice dans ladite préforme, le traitement étant réalisé à une température qui est inférieure à la température de dégradation de la préforme, inférieure à la température de dégradation du corps tubulaire métallique et inférieure à la température de dégradation du corps tubulaire interne.

On entend par « température de dégradation » la température à partir de laquelle le matériau présente des performances thermomécaniques incompatibles avec ses règles d'usage pour l'application visée. De manière ultime, il s'agit de la température de fusion, mais la température de dégradation effective est susceptible d'être plus faible : elle dépend des conditions d'environnement thermochimique qui sont à l'origine de réactions entre matériaux. Ainsi, dans le cas d'une gaine de combustible nucléaire, on devra prendre en compte les formations d'eutectiques avec le combustible et les produits de fission, ou encore les réactions de dissociation éventuellement induites par le fluide caloporteur, notamment en conditions accidentelles (où l'accroissement de température (au-delà de 1000°C, par exemple), d'une part, et l'apport éventuel de matières absentes en conditions nominales (entrée d'air, d'eau ou d'azote, du fait d'une brèche dans le circuit primaire du réacteur, par exemple), d'autre part, sont susceptibles d'activer des réactions thermochimiques potentiellement pénalisantes (oxydation ou hydruration à haute température, par exemple)).

Pour obtenir le corps tubulaire interne dont il est question à l'étape a), on peut utiliser un corps tubulaire préfabriqué, acheté dans le commerce. On peut également choisir de le réaliser. Dans ce cas, l'étape a) du procédé ci-dessus peut comprendre les étapes successives suivantes :
- la réalisation d'une préforme fibreuse à base de fibres continues sur un élément support cylindrique ;
- l'application d'un traitement pour induire la consolidation de ladite préforme par formation d'une matrice dans la préforme, le traitement étant réalisé à une température qui est inférieure à la température de dégradation de la préforme et inférieure à la température de dégradation de l'élément support ;
- le retrait de l'élément support de la préforme consolidée par attaque chimique de la surface de contact du matériau de l'élément support avec la préforme consolidée ;
- la densification de la préforme consolidée réalisée à une température inférieure à la température de dégradation de la préforme consolidée.

La consolidation, de même que la densification, peuvent par exemple consister en une densification CVI, c'est-à-dire en une infiltration d'un gaz précurseur de la matrice céramique dans la préforme fibreuse, réalisée dans un four à température élevée. Sous l'effet de la température et au contact de la préforme fibreuse, le gaz précurseur se décompose et produit du carbone ou des composés céramiques (carbure de silicium ou autres) qui viennent combler la porosité.

La densification et/ou la consolidation peuvent en outre être obtenues par un procédé de type PIP, c'est-à-dire une imprégnation d'une solution d'un polymère précurseur de la matrice céramique du corps tubulaire interne à réaliser, suivie d'une pyrolyse du polymère précurseur à haute température.

Pour former le corps tubulaire métallique sur le corps tubulaire interne, on peut procéder de deux manières différentes.

Selon une première variante, l'étape b) comprend le dépôt en phase vapeur d'une couche en métal ou en alliage de métaux sur la surface externe du corps tubulaire interne.

Selon une deuxième variante, l'étape b) comprend les étapes successives suivantes :
- l'insertion du corps tubulaire interne dans un tube métallique en métal ou en alliage de métaux ;
- le plaquage de ce tube métallique sur la surface externe du corps tubulaire interne ;
- le recuit éventuel de la pièce ainsi formée.

Le corps tubulaire métallique peut être fabriqué par des techniques connues de l'homme du métier, par exemple par la technique du laminage à froid (de préférence par laminage HPTR), du laminage à chaud, par filage ou par extrusion. La technique du laminage à froid présente l'avantage de s'adapter à de nombreux métaux et alliages.

Le plaquage peut être réalisé par des techniques connues de l'homme du métier, par exemple par la technique de l'étirage à froid ou à chaud, ou par impulsion magnétique.

Ce procédé de fabrication peut en outre comprendre, entre les étapes a) et b), une étape de traitement de surface de la surface du corps tubulaire interne pour en réduire la rugosité. Il peut s'agir par exemple d'une rectification diamantée de la surface externe du tube composite par la technique de « rectification sans centre ».

Il est également possible de réaliser, entre les étapes a) et b), d'une part, et entre les étapes b) et c), d'autre part, une étape de dépôt d'une couche tampon en un matériau choisi pour assurer la compatibilité thermomécanique vis-à-vis des dilatations différentielles entre les deux corps adjacents.

L'invention concerne également un procédé de fabrication d'une structure tubulaire telle que définie ci-dessus. Ce procédé de fabrication d'une structure tubulaire comprend la fabrication d'une gaine, selon le procédé de fabrication d'une gaine décrit ci-dessus, et l'obturation de la ou des extrémités ouvertes de ladite gaine par le placement d'un couvercle sur chacune de ces extrémités ouvertes et la fixation dudit couvercle sur le corps tubulaire métallique, chaque couvercle comprenant une couche interne en métal ou en alliage de métaux et éventuellement une couche supplémentaire en matériau composite à matrice céramique.

Ledit procédé peut, par exemple, comprendre la mise en forme de la gaine de manière à ce qu'elle comporte, au niveau de chacune de ses extrémités ouvertes, une zone annulaire dans laquelle le corps tubulaire métallique n'est pas recouvert par le corps tubulaire externe, chaque zone annulaire étant totalement recouverte par la couche interne métallique d'un couvercle lors de la fixation d'un couvercle sur l'extrémité ouverte correspondant à ladite zone annulaire.

Cette zone annulaire peut être obtenue en réalisant un corps tubulaire externe de longueur inférieure à la longueur du corps tubulaire métallique au cours de l'étape c) ; elle peut également être obtenue en retirant une portion de la couche en matériau composite à matrice céramique formant le corps tubulaire externe de sorte à avoir une portion annulaire laissant découverte la couche métallique au niveau de la ou des extrémités ouvertes du corps tubulaire métallique. Une fois qu'on a cette zone annulaire, on peut alors fixer le couvercle à la partie découverte de la couche métallique, et, si le couvercle comporte une couche externe en CMC, fixer la couche en CMC du couvercle à la couche CMC externe de la gaine, par un procédé connu de l'homme du métier, tel que le brasage, par exemple.

La disposition et les caractéristiques particulières des couches de la gaine selon l'invention lui confèrent de nombreux avantages.

Tout d'abord, en disposant la couche métallique (qui joue le rôle de couche d'herméticité) entre deux couches CMC, cela revient à maintenir la couche d'herméticité entre deux renforts mécaniques qui, du fait de leur rigidité, la protègent des sollicitations thermomécaniques appliquées, d'une part, par le produit contenu dans la gaine (le combustible nucléaire et les gaz de fission qu'il relâche sous irradiation en réacteur, par exemple) et, d'autre part, par le produit se trouvant à l'extérieur de la gaine (le caloporteur, éventuellement pressurisé, par exemple), prévenant ainsi tout risque de déformation excessive susceptible de conduire à la détérioration de la couche d'herméticité.

Du fait du procédé de fabrication particulier, la couche métallique est contrainte géométriquement par les couches composites et, comme elle a une faible épaisseur par rapport aux couches composites, elle ne participe que de manière très limitée à la tenue mécanique de la pièce finale. En condition d'utilisation, la charge est supportée majoritairement par les couches composites d'épaisseurs plus importantes. Comme illustré sur la figure 1, ce procédé de fabrication permet à la gaine d'être sollicitée au-delà de la limite élastique du matériau composite utilisé seul : les couches de composites peuvent donc se fissurer, sans que la gaine ne perde ses propriétés d'herméticité.

En outre, le choix, optionnel mais préférable, de matériaux identiques pour les deux couches CMC permet de garantir qu'elles n'imposent pas des déformations différentielles importantes aux deux faces de la couche métallique qu'elles encadrent. N'oublions pas que la couche métallique est mince par rapport aux deux couches CMC et qu'elle est donc peu résistante.

Par ailleurs, comme la couche métallique est fine par rapport aux couches CMC qui l'entourent, et du fait de sa très bonne conductivité thermique, il y a un faible écart de température entre ses faces.

Comme la couche d'herméticité (couche métallique) est disposée entre deux couches CMC, la couche d'herméticité est protégée des agressions thermochimiques du combustible et des produits de fission, vis-à-vis desquels elle est « isolée ». En effet, il n'y a pas de contact direct, hors les éventuelles migrations de produits de fission au travers de la couche de CMC interne, qui sont naturellement limitées par l'épaisseur de la couche CMC interne et par la maîtrise de sa fissuration. Il est possible de protéger encore davantage la couche d'herméticité en disposant une couche de protection sur la couche de CMC interne (corps tubulaire interne) ; la couche CMC n'est alors pas en contact direct avec le combustible. Cette couche de protection est une couche de type « joint solide poreux », connue de l'homme du métier. Cette couche de type « joint solide poreux » peut par exemple avoir une structure fibreuse ou alvéolaire, réalisée à base de C et/ou de SiC, et ayant une forte porosité, afin de permettre d'accommoder, par son écrasement, l'expansion volumique du combustible sans chargement mécanique de la gaine, de favoriser le transfert thermique du combustible vers la gaine, et de transporter les gaz de fission relâchés vers le plenum gazeux situé en extrémité axiale de l'élément combustible). Grâce à cette disposition particulière, la couche d'herméticité est protégée des agressions physiques provoquées par les produits de fission générés en périphérie du combustible, dont l'énergie de recul crée des dommages qui sont absorbés par la gaine CMC interne, voire par l'éventuelle couche de protection. Ainsi, la couche métallique remplit sa fonction d'herméticité qui est notamment requise pour confiner les produits radioactifs créés par l'irradiation du combustible nucléaire (uranium et/ou plutonium et/ou thorium, sous forme d'oxyde, de carbure, de nitrure,... éventuellement chargé en actinides mineurs, tels que l'américium, le neptunium, le curium...).

En étant disposée entre deux couches CMC, la couche d'herméticité est également protégée des agressions thermochimiques du caloporteur et de ses impuretés, vis-à-vis desquels elle est « isolée ». Il n'y a pas de contact direct, hors les éventuelles migrations des impuretés au travers de la couche de CMC externe, qui sont naturellement limitées par l'épaisseur de la couche CMC externe et par la maîtrise de sa fissuration.

Enfin, la fermeture de la gaine proposée en exemple à ses extrémités est facilitée, par rapport à une gaine munie d'une couche métallique intérieure, du fait de la possibilité de réaliser des opérations conventionnelles de soudage entre cette couche métallique et des moyens d'obturation classiques (couvercles et capots de fermeture).

En résumé, la conception originale de la gaine proposée dans le cadre de cette invention permet d'assurer la fonction d'herméticité jusqu'au démantèlement :
- en assurant l'intégrité mécanique de la couche métallique mince par le renfort apporté, sur ses deux faces, par les couches CMC dimensionnées de manière à garantir la tenue mécanique de la gaine (gainage) sous toutes les sollicitations usuelles en fonctionnement ;
- en assurant l'intégrité physico-chimique de la couche métallique mince vis-à-vis des agressions thermochimiques (du combustible et de ses produits de fission, d'une part, et du caloporteur et de ses impuretés, d'autre part) et physiques (endommagement par l'énergie de recul des fragments de fission créés en périphérie du combustible), par la protection qu'apportent les couches CMC disposées sur ses deux faces ;
- en facilitant la fermeture hermétique de la gaine à ses extrémités ouvertes.

L'invention sera mieux comprise et d'autres avantages et particularités apparaîtront à la lecture de la description qui va suivre, donnée à titre d'exemple non limitatif, accompagnée des figures annexées 2, 3a et 3b.

### BRÈVE DESCRIPTION DES DESSINS

La figure 1, déjà évoquée précédemment, représente le comportement d'un composite SiC_{f}/SiC tubulaire tressé 2D sollicité en traction uniaxiale, la déformation étant représentée en abscisse et la contrainte en ordonnée. Cette courbe de traction met en évidence un régime élastique (proportionnalité entre la contrainte et la déformation) s'étendant jusqu'à une contrainte d'environ 80 MPa et une contrainte correspondant à 0,04% d'allongement, qui délimite le domaine de fonctionnement usuel sur lequel l'herméticité du composite peut être envisagée : au-delà de ces valeurs, il y a multi-fissuration de la matrice, ce qui provoque une perte d'herméticité. Par ailleurs, la figure 1 met en évidence les caractéristiques à rupture du composite, pour une contrainte de l'ordre de 300 MPa et un allongement de l'ordre de 0,9%. Enfin, la figure 1 illustre un domaine d'usage mécanique usuel des composites comme gainage de combustible nucléaire, avec des contraintes pouvant atteindre de l'ordre de 200 MPa et des déformations de l'ordre de 0,5%. Un gainage d'élément combustible nucléaire devant préserver son herméticité et son intégrité mécanique en toute situation de dimensionnement, le matériau dont le comportement est illustré sur la figure 1 satisfait l'exigence d'intégrité mécanique (au sens d'une absence de rupture ou de déformation excessive de gaine), mais ne respecte l'exigence d'herméticité que sur son domaine élastique, plus restreint que le domaine d'usage. De fait, l'objet du brevet est d'étendre le domaine d'herméticité de la gaine de combustible nucléaire, à base de composite à matrice céramique (SiC_{f}/SiC, notamment), au-delà du domaine d'usage mécanique de ce type d'objet : les trois domaines (accessible/usage/visé) sont représentés sur la figure par un système de hachures.
La figure 2 représente, de manière schématique et selon une vue en coupe axiale, la gaine selon l'invention.
Les figures 3a et 3b représentent respectivement, selon une vue en coupe axiale et selon une vue en coupe longitudinale, une gaine de combustible nucléaire selon l'invention, obtenue en introduisant un combustible nucléaire à l'intérieur d'une structure tubulaire multicouche selon l'invention.

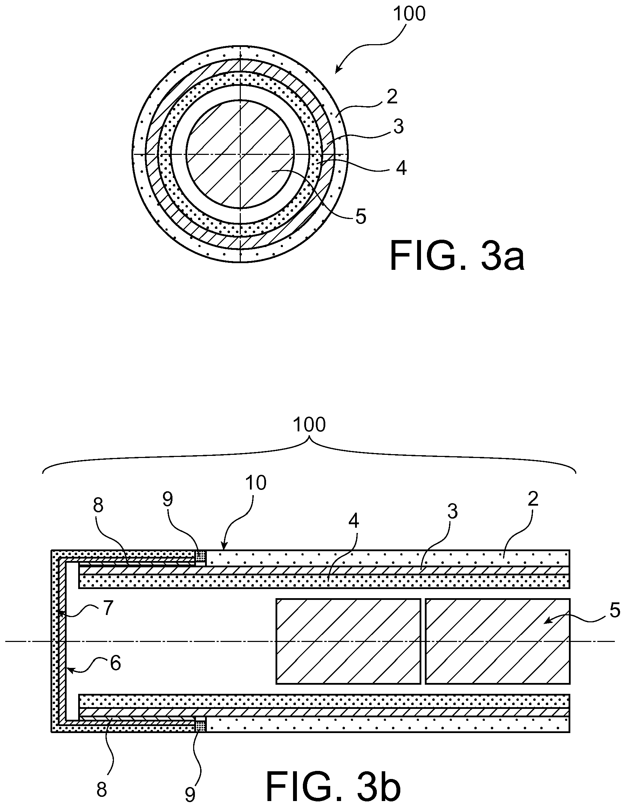

Il est à noter que l'échelle entre les épaisseurs des différents corps tubulaires n'est pas respectée dans les figures 2, 3a et 3b. En effet, afin de visualiser correctement le corps tubulaire métallique, on représente son épaisseur comme comparable à celle des corps tubulaires interne et externe, qui sont en réalité beaucoup plus épais.

### EXPOSÉ DÉTAILLÉ DE MODES DE RÉALISATION PARTICULIERS

En référence à la figure 2, la gaine 1 selon l'invention comporte une couche externe en matériau CMC formant un corps tubulaire externe 2, qui recouvre un corps tubulaire métallique 3, qui lui-même recouvre une couche interne en matériau CMC formant un corps tubulaire interne 4.

De préférence, la gaine de combustible nucléaire 10 est destinée à contenir du combustible nucléaire pour former un élément combustible 100.

Dans ce cas, le combustible nucléaire est introduit dans la gaine 1, comme représenté dans la figure 3a. L'espace représenté entre le corps tubulaire interne 4 et le combustible nucléaire 5 peut correspondre à un milieu gazeux ou bien encore à un joint d'interface solide poreux, qui a notamment pour fonction :
- d'accommoder par son écrasement l'expansion volumique du combustible sans chargement mécanique de la gaine ;
- de favoriser le transfert thermique du combustible vers la gaine ;
- de transporter les gaz de fission relâchés vers le plenum gazeux situé en extrémité axiale de l'élément combustible.

La gaine selon l'invention est formée de corps tubulaires ou tubes qui peuvent donc présenter deux extrémités ouvertes ou une extrémité ouverte (l'autre extrémité étant borgne).

Pour réaliser une gaine de combustible nucléaire 10, il faut que le combustible nucléaire 5 se trouve au sein d'une enceinte fermée et il faut donc pour cela que les extrémités ouvertes de la gaine 1 soient obturées.

Comme représenté dans la figure 3b, une manière proposée selon l'invention pour fermer les extrémités ouvertes de la gaine 1 est de disposer d'une zone annulaire à proximité des extrémités ouvertes dans laquelle le corps tubulaire métallique n'est pas recouvert par le corps tubulaire externe : la couche métallique est ainsi accessible sur le pourtour des extrémités ouvertes de la gaine. Cette zone peut être obtenue en retirant une portion de la couche externe formant le corps tubulaire externe 2. Il suffit ensuite de positionner un premier couvercle 6 métallique sur les deux extrémités ouvertes de la gaine 1, de manière à recouvrir la couche métallique du corps tubulaire métallique dans la zone annulaire et à fermer le corps tubulaire métallique. Cette fermeture peut être obtenue en fixant ce premier couvercle 6 sur la zone annulaire en effectuant une soudure 8 entre les parois métalliques du premier couvercle et de la zone annulaire. On peut ensuite positionner, sur le premier couvercle, un second couvercle 7 en matériau CMC afin de fermer le corps tubulaire externe 2 de matériau CMC. On peut également utiliser un unique couvercle composé à la fois d'une couche de métal interne, recouverte d'une couche en matériau CMC.

Le second couvercle est optionnel si le premier couvercle (couvercle métallique) satisfait l'ensemble des contraintes de fermeture de la gaine, notamment la reprise de l'effet de fond, bien connue de l'homme du métier.

De préférence, le ou les couvercles sont montés et fixés sur la gaine de manière à ce qu'il y ait une liaison continue, d'une part, entre la couche métallique du corps tubulaire métallique 3 et le premier couvercle 6 (ou avec la partie métallique interne du couvercle dans le cas d'un unique couvercle) et, d'autre part, entre le corps tubulaire externe 2 et le second couvercle 7 (ou avec la partie en matériau CMC externe du couvercle dans le cas d'un unique couvercle). Lesdites liaisons continues peuvent par exemple être obtenues par le biais d'une soudure, dans le cas d'une liaison entre des métaux, ou d'une brasure, dans le cas d'une liaison entre des matériaux CMC.

Il est à noter que la gaine de combustible nucléaire 10 schématisée dans les figues 2a et 2b est représentée à froid et en début d'irradiation en réacteur, d'où la présence de l'espace entre le corps interne 4 et le combustible nucléaire 5.

Le combustible nucléaire 5 est sous forme de pastilles combustibles qui sont empilées à l'intérieur de la gaine de combustible 10, le tout formant un élément combustible 100.

Il est à noter que l'espace axial entre le combustible nucléaire 5 et le premier couvercle 6 est destiné à être occupé par un dispositif de positionnement axial (non représenté) de la colonne de pastilles combustibles (dispositif comprenant typiquement un ressort, une entretoise et/ou des cales).

Les matériaux CMC des corps tubulaires externe et interne de la gaine peuvent, par exemple, être des composites à matrice céramique de type SiC_{f}/SiC, SiC_{f}/TiC, SiC_{f}/ZrC ou SiC_{f}/Ti₃SiC₂, tels qu'évoqués dans le document **[6].**

La couche d'herméticité est en métal ou en alliage de métaux : le niobium et ses alliages, le tantale et ses alliages, le tungstène et ses alliages, le titane et ses alliages ; par exemple Nb-1Zr, Nb-1Zr-0,1C, Ta, W-5Re. Il est important de noter que, afin de garantir l'intégrité et les propriétés de l'objet, la compatibilité chimique du métal ou de l'alliage avec le matériau CMC utilisé doit être vérifiée sur l'ensemble du domaine de température d'utilisation de la future gaine, ainsi que sur l'ensemble du domaine de température de fabrication des couches CMC.

Les valeurs des épaisseurs des différentes couches de la gaine sont, de préférence, comprises dans les intervalles suivants :
- couche CMC interne (corps tubulaire interne) : 0,2 à 0,5 mm ;
- couche métallique d'herméticité (corps tubulaire métallique) : 50 à 200 *µ*m ;
- couche CMC externe (corps tubulaire externe) : 0,3 à 1 mm,

les épaisseurs des couches CMC interne et externe étant cependant choisies de manière à ce qu'elles soient supérieures à celle de la couche d'herméticité, de préférence au moins 3 fois supérieures ou égales à l'épaisseur de la couche d'herméticité. En fait, on cherche à minimiser l'épaisseur de la couche d'herméticité et de l'épaisseur globale de la gaine, afin d'optimiser la neutronique.

La gaine selon l'invention présente l'intérêt d'utiliser une grande majorité de phases composites à matrice céramique en lieu et place d'une pièce totalement métallique. La couche métallique n'a ici pour but que de garantir l'herméticité de la pièce globale. En effet, pour beaucoup d'applications envisagées (enceinte en pression fonctionnant à haute température, par exemple), l'utilisation de métal est à proscrire en raison de sa densité et/ou de sa faible tenue mécanique à haute température, et/ou en raison de sa section de capture neutronique, dans le cas d'applications nucléaires. Il est donc nécessaire de limiter l'épaisseur de la couche métallique au strict minimum.

La réalisation d'une gaine selon l'invention peut être décomposée en plusieurs étapes, à savoir :
1) la fabrication du corps tubulaire interne en matériau CMC ;
2) la préparation de la surface externe de ce corps tubulaire interne (cette étape étant optionnelle, mais préférable) ;
3) la fabrication du corps tubulaire métallique (tube d'herméticité) de faible épaisseur ;
4) le plaquage, ou toute autre technique de dépôt connue de l'homme du métier, du corps tubulaire métallique sur le corps tubulaire interne ;
5) la préparation de la surface externe du corps tubulaire métallique ainsi obtenu (cette étape étant optionnelle, mais préférable) ;
6) la fabrication de la préforme fibreuse du corps tubulaire externe directement sur le corps tubulaire métallique obtenu à l'étape 5, puis sa densification, et enfin son revêtement final éventuel (cette étape de revêtement étant optionnelle, mais préférable) conduisant à l'obtention de la gaine.

Il est à noter qu'il est également possible, au lieu de fabriquer le corps tubulaire interne et le corps tubulaire métallique, d'utiliser des tubes déjà conditionnés.

La première étape de fabrication de la pièce consiste à élaborer un tube destiné à constituer le corps tubulaire en matériau CMC interne. Pour cela, un renfort fibreux est mis en forme autour d'un mandrin cylindrique choisi selon la nature du composite à élaborer.

Dans le cas de composites à renfort et à matrice de type carbone ou carbure de silicium, il est préférable d'utiliser un mandrin en verre de silice, de manière à ce que le mandrin puisse facilement être retiré en fin de procédé par simple dissolution chimique. En l'occurrence, un bon état de surface interne du tube interne ainsi que le respect des côtes et tolérances (qui sont des exigences fortes pour le gainage d'un élément combustible nucléaire notamment) sont plus accessibles avec cette nature de mandrin qu'avec un mandrin en graphite, classiquement utilisé.

Pour la fabrication de composites à matrice céramique utilisant des phases oxydes, la nature du mandrin devra être adaptée au procédé ultérieur de densification.

La mise en forme de l'architecture fibreuse du renfort peut être réalisée par une des techniques issues de l'industrie textile adaptées aux pièces géométriques possédant un axe de révolution telles que l'enroulement filamentaire ou le tressage 2D ou 3D interlock.

L'épaisseur du renfort (nombre de couches de tressage ou d'enroulement) est choisie selon l'épaisseur visée pour ce tube interne.

Une fois que la mise en forme du renfort sur le mandrin est terminée, le renfort est densifié. Pour ce faire, on peut utiliser un procédé d'infiltration chimique en phase vapeur, également appelé CVI (pour « Chemical Vapor Infiltration » en anglais), bien connu de l'homme du métier, bien que d'autres procédés tels le frittage, le procédé PIP (pour « Polymer Infiltration Process » en anglais), les procédés en voie liquide ou mixtes peuvent également être employés.

Lorsque la densification du renfort est terminée, le mandrin ayant servi de support au renfort est retiré.

La seconde étape, qui est optionnelle mais préférable, consiste à préparer la surface externe du tube composite interne ainsi obtenu, rugueuse et abrasive par nature, de manière à obtenir une surface ayant une rugosité RMS maximale de 1 à 2 µm afin de permettre un plaquage optimal du futur tube métallique servant de couche d'herméticité sur le tube composite interne.

On peut pour cela procéder à un usinage de la surface externe du tube composite. L'expérience montre qu'une rectification diamantée de la surface externe du tube composite par la technique de « rectification sans centre » donne de bons résultats : des rugosités moyennes de surface d'environ 1 µm peuvent être obtenues pour une surface ainsi rectifiée, contre 50 à 100 µm sans préparation.

On peut également recourir à un dépôt en phase vapeur (CVD ou PVD) d'une couche d'une épaisseur de quelques centaines de nanomètres sur la surface externe dudit tube composite interne, ou encore déposer un revêtement céramique obtenu par voie liquide.

Selon le matériau choisi pour ladite couche, cette couche peut en outre avoir pour rôle d'accommoder les déformations différentielles entre le tube composite en CMC et la couche métallique mise en place en face externe à l'étape suivante du procédé. Par exemple, dans le cas d'un tube composite en SiC_{f}/SiC, on peut utiliser un matériau de type pyrocarbone pour réaliser cette couche.

La troisième étape consiste à fabriquer un tube métallique que l'on utilisera comme couche d'herméticité pour réaliser le corps tubulaire métallique de la gaine. Le choix de la nature du métal est très important pour l'application visée et sera fonction du type de composite des tubes interne et externe et des conditions d'utilisation. En effet, il convient notamment de choisir une phase métallique compatible avec les phases céramiques du composite, que ce soit dans le domaine des températures de fonctionnement de la pièce finale, mais également dans le domaine des températures d'élaboration du composite suivant le procédé de densification choisi.

Dans le cas des composites C_{f}/C, C_{f}/SiC ou SiC_{f}/SiC par exemple, les procédés de densification possibles nécessitent des températures de mise en oeuvre proches de 1000°C. Il convient donc dans ce cas de sélectionner uniquement les métaux qui présentent une bonne compatibilité chimique avec les phases carbone et carbure de silicium à 1000°C. Les métaux proposés sont le niobium et ses alliages (Nb-1Zr, Nb-1Zr-0,1C), mais aussi le tantale et ses alliages, le tungstène ou le titane dans une moindre mesure.

Bien entendu, dans le cas de phases céramiques différentes, d'autres alliages seront peut-être plus appropriés.

Afin de limiter l'épaisseur du tube métallique au strict minimum, on choisit d'utiliser une technique de mise en forme du tube métallique aux cotes désirées, qui permet d'obtenir une épaisseur minimale jusqu'à 0,1 mm, voir en deçà. On peut par exemple utiliser la technique du laminage à froid, cette technique ayant l'avantage de s'adapter à de nombreux métaux et alliages. En l'occurrence, les Inventeurs ont utilisé un banc de laminage HPTR, mais d'autres bancs de laminage à froid ou à chaud pourraient également être utilisés. On pourrait également utiliser la technique du filage ou de l'extrusion.

Pour les cotes du tube métallique, on vise un diamètre interne égal au diamètre externe du tube interne composite rectifié, auquel on ajoute un jeu afin que le tube composite interne puisse être inséré sur le tube métallique, ce jeu étant toutefois le plus faible possible afin de faciliter l'étape de plaquage qui sera décrite ci-dessous. Pour les essais réalisés, un jeu diamétral de l'ordre de 0,1 mm a été utilisé. Il convient de rappeler ici que le laminage a pour effet d'écrouir le métal ou alliage utilisé. Cet écrouissage a pour principale conséquence d'augmenter la dureté du matériau et de limiter sa déformation à rupture. Afin de récupérer des propriétés du métal ou alliage proche des valeurs initiales, il est préférable de réaliser un recuit après le laminage, qui est propre à chaque matériau.

L'étape suivante consiste à venir plaquer le tube métallique sur le tube composite intérieur. Cette opération a pour but de garantir un contact intime entre ces deux éléments. Ce plaquage peut être obtenu par plusieurs techniques. Par exemple, on peut recourir à l'étirage contrôlé du tube métallique sur le tube composite interne. Pour cela, le tube composite interne est inséré dans le tube métallique grâce au jeu prévu ; puis, le tube métallique est sollicité mécaniquement en traction de façon à ce qu'il se rétracte sur la paroi du tube composite interne (effet poisson).

D'autres techniques de plaquage peuvent être envisagées, telles que l'étirage à chaud ou encore l'impulsion magnétique, qui consiste à utiliser un champ magnétique de forte intensité afin de plaquer le tube métallique sur le tube composite interne non magnétique.

Il est également possible de remplacer les étapes de fabrication du tube métallique et de plaquage par une étape de dépôt en phase vapeur (CVD ou PVD) d'une couche métallique directement sur le tube composite interne.

Dans une cinquième étape, optionnelle mais préférable, le tube bicouche une fois formé peut éventuellement subir une rectification de la rugosité de sa surface externe métallique ou un dépôt en phase vapeur d'une couche supplémentaire, comme décrit précédemment pour le tube composite interne.

La dernière étape consiste à fabriquer le tube composite externe. La procédure est similaire à celle employée pour la fabrication de la couche composite interne. Le renfort fibreux est d'abord mis en forme par les mêmes techniques que celles évoquées précédemment (enroulement filamentaire, tressage 2D ou 3D interlock), puis est densifié. Pour cette fabrication et contrairement à la première étape qui requiert l'utilisation d'un mandrin support temporaire, le tube composite externe est ici directement mis en forme sur le tube bicouche composite/métallique élaboré.

On obtient alors une pièce composite à matrice céramique multicouche hermétique jusqu'à rupture telle que celle représentée dans la figure 2.

Eventuellement, si l'on souhaite que la pièce finale présente une rugosité minimale sur sa surface externe, cette surface externe (c'est-à-dire le tube composite externe) peut être rectifiée par rectification sans centre ou être recouverte d'une couche supplémentaire.

La gaine ainsi élaborée est une pièce tubulaire multicouche qui est utilisée pour réaliser une enceinte en pression, telle qu'une gaine d'élément combustible nucléaire. Elle peut également être utilisée pour réaliser une conduite de fluides sous pression (non revendiquée). Nous allons décrire ci-dessous la réalisation d'une gaine d'élément combustible nucléaire, qui constitue l'application ciblée en priorité par l'invention.

Comme décrit ci-dessus, on commence par élaborer un tube CMC interne, en l'occurrence un tube en SiC_{f}/SiC de diamètre interne de 7 mm et d'épaisseur de 300 *µ*m, éventuellement complété du revêtement de la face externe du tube composite par une couche d'un matériau de type pyrocarbone.

On élabore ensuite un tube métallique en tantale, de diamètre interne 7,7 mm et de 100 *µ*m d'épaisseur, soit par laminage suivi d'un plaquage (par un procédé de magnétoformage ou d'étirage) sur le tube CMC interne, soit par élaboration d'une couche par dépôt en phase vapeur directement sur le tube CMC interne.

La couche de tantale est ensuite éventuellement recouverte d'une couche d'un matériau de type pyrocarbone de quelques centaines de nanomètres.

Enfin, on réalise un tube composite externe en SiC_{f}/SiC de 600 µm d'épaisseur directement sur la pièce obtenue à l'étape précédente, par mise en forme du renfort en SiC/SiC et imprégnation de ce renfort suivant un procédé usuel, éventuellement complété du revêtement ou de la rectification de la face externe de ce tube composite externe. Ce dernier revêtement, réalisé par dépôt en phase vapeur (PVD ou CVD), d'un matériau de type SiC, d'une épaisseur de quelques centaines de nanomètres, vise à fournir un état de surface lisse, si ceci correspond à une exigence (cela peut être nécessaire pour réduire les pertes de charges associées au frottement du caloporteur le long de la gaine, par exemple).

Pour obtenir une structure multicouche (gaine dont les extrémités ouvertes sont obturées), on procède au dégagement des extrémités de la gaine, par usinage de la couche CMC externe, par exemple sur une longueur de 5 mm, sans endommager la couche métallique sous-jacente.

On procède ensuite à la fermeture de l'une des deux extrémités de la gaine, par soudage d'un couvercle ou capot métallique 6 sur la partie du tube métallique dégagée précédemment (couvercle, par exemple, d'une épaisseur de 100 µm obtenu par emboutissage), puis brasage d'un couvercle en matériau CMC (par exemple en SiC_{f}/SiC) sur le tube CMC externe. Dans la figure 3b, le cordon de soudure est repéré par la référence 8, tandis que le cordon de brasure est repéré par la référence 9.

On peut éventuellement combiner le couvercle métallique et le couvercle CMC en un seul capot.

Le couvercle CMC peut être optionnel, à condition de choisir un métal, pour le couvercle, présentant des propriétés thermomécaniques adéquates en termes de réfractarité et de tenue à la pression interne en fonctionnement normal et accidentel. On peut par exemple utiliser un couvercle métallique d'épaisseur 700 µm, obtenu par emboutissage ou usinage, soudé au tube métallique et brasé au tube CMC externe de la gaine.

On notera que cette étape de fermeture d'une extrémité de la structure tubulaire multicouche peut être rendue optionnelle dans le cas où les étapes précédentes sont réalisées de manière à fabriquer un tube borgne (fermé à l'une de ses extrémités).

On procède ensuite à l'insertion des pastilles de combustible nucléaire 5 (qui ont ici un diamètre de 6,71 mm) dans la structure tubulaire, ainsi qu'à l'insertion des internes (ressort, entretoise et cales), qui sont disposés entre la colonne de pastilles et le couvercle (non représentés dans la figure 3b).

Enfin, on procède à la fermeture de l'autre extrémité ouverte de la gaine, suivant la procédure décrite ci-dessus.

L'innovation de la solution proposée réside dans le caractère multicouche du concept de gainage, avec le positionnement de la couche métallique, jouant le rôle de couche d'herméticité, entre deux couches CMC répondant aux exigences de réfractarité et de tenue mécanique dans le cas de la réalisation d'un élément combustible avancé.

Ce positionnement particulier permet la mise en oeuvre d'une couche d'herméticité de faible épaisseur (50 à 200 *µ*m) sans risque de fragilisation par déformation excessive, jusqu'à des températures et fluences neutroniques élevées, ni risque d'endommagement par le combustible nucléaire et ses produits de fission, jusqu'à des taux de combustion élevés.

Cette faible épaisseur de la couche métallique, d'une part, et l'absence d'interaction forte avec le combustible et ses produits de fission, d'autre part, permettent le recours à une gamme étendue de matériaux d'herméticité.

Cette solution propose un mode de confinement durable des produits de fission pour un élément combustible à gainage à base de matériau CMC. A ce titre, elle ouvre les perspectives de mise en oeuvre de ce type de gainages, dont la réfractarité (assortie de bonnes propriétés neutroniques) doit permettre d'accroître la sûreté de l'élément combustible en garantissant sont intégrité géométrique (garante du contrôle de la réactivité et de la refroidissabilité du coeur du réacteur) jusqu'aux températures très élevées des transitoires accidentels à prendre en compte dans son dimensionnement.

Les tubes externe et interne en matériau CMC jouent non seulement le rôle de renfort mécanique, mais également de renfort réfractaire visant à consolider la tenue d'un gainage métallique conventionnel aux transitoires accidentels (stabilité thermique et résistance au fluage), ce qui permet d'atteindre des objectifs de sûreté typiquement visés pour la filière RNR-G ou dans le cadre d'une amélioration importante de la tenue d'un gainage aux conditions de haute température de certains transitoires accidentels en REP, REB et RNR-Na.

### BIBLIOGRAPHIE

**[1]** US 5,182,077 Feinroth et al.*,* "*Water cooled nuclear reactor and fuel elements therefor*"
**[2]** US 2006/0039524 A1 Feinroth et al.*,* "*Multi-layered ceramic tube for fuel containment barrier and other applications in nuclear and fossil power plants*"
[3] US 5,681,511 Streckert et al.*,* "*Hermetic ceramic composite structures*"
**[4]** Spatz et al. "Design of hybrid ceramic-metal tubes", Proceedings for HTCMC-7, pp. 572-578
**[5]** US 2009/0101658 A1 Maile et al., "Pressure-resistant body that is supplied with fluid"
**[6]** WO 2010/031925 A2 Cabrero et al.*, "Gaine de combustible nucléaire à haute conductivité thermique et son procédé de fabrication*"

## Revendications

1. Gaine de combustible nucléaire (1) pour réacteur nucléaire ayant une à deux extrémités ouvertes et comprenant une couche métallique formant un corps tubulaire métallique (3) et deux couches en matériau composite à matrice céramique, recouvrant le corps tubulaire métallique, une des deux couches en matériau composite à matrice céramique recouvre la surface interne du corps tubulaire métallique pour former un corps tubulaire interne (4), tandis que l'autre des deux couches en matériau composite à matrice céramique recouvre la surface externe du corps tubulaire métallique pour former un corps tubulaire externe (2), le corps tubulaire métallique se trouvant ainsi pris en sandwich entre les corps tubulaires interne et externe, le corps tubulaire métallique ayant une épaisseur moyenne inférieure aux épaisseurs moyennes des corps tubulaires interne et externe.

2. Gaine selon la revendication 1, dans laquelle le corps tubulaire métallique (3) a une épaisseur moyenne comprise entre 5 % et 20 % de l'épaisseur moyenne de la gaine.

3. Gaine selon la revendication 1, dans laquelle le corps tubulaire métallique (3) est en un matériau choisi parmi le niobium et ses alliages, le tantale et ses alliages, le tungstène et ses alliages, le titane et ses alliages.

4. Gaine selon la revendication 1, dans lequel les corps tubulaires interne (4) et externe (2) sont en composite C_{f}/C, C_{f}/SiC ou SiC_{f}/SiC.

5. Structure tubulaire (10) présentant une cavité fermée, ladite structure comprenant une gaine (1) telle que définie dans l'une quelconque des revendications 1 à 4 et au moins un couvercle (7 ; 8) pour chaque extrémité ouverte de la gaine, chaque couvercle étant positionné au niveau d'une extrémité ouverte de manière à obturer complètement ladite extrémité ouverte, chaque couvercle comprenant une couche interne, en métal ou en alliage de métaux, destinée à être fixée au corps tubulaire métallique de la gaine, et éventuellement une couche supplémentaire, en matériau composite à matrice céramique, destinée à être fixée au corps tubulaire externe de la gaine, la cavité fermée de la structure étant délimitée par une paroi interne de la gaine et par une paroi interne de chaque couvercle.

6. Structure tubulaire (10) selon la revendication 5, dans laquelle la gaine (1) comprend, au niveau de chaque extrémité ouverte, une zone annulaire dans laquelle le corps tubulaire métallique n'est pas recouvert par le corps tubulaire externe et dans laquelle chaque couvercle est formé d'un fond relié à un bord latéral, ledit bord latéral étant adapté pour recouvrir ladite zone annulaire.

7. Structure tubulaire selon la revendication 5 ou 6, dans lequel la cavité fermée est apte à contenir un combustible nucléaire et les gaz de fission relâchés par ledit combustible nucléaire sous irradiation.

8. Structure tubulaire selon la revendication 7, dans laquelle le corps tubulaire métallique (3) de la gaine a une épaisseur moyenne comprise entre 50 et 200 micromètres.

9. Elément combustible nucléaire (100) comprenant du combustible nucléaire (5) logé dans la cavité fermée d'une structure tubulaire (10) telle que définie dans l'une quelconque des revendications 5 à 8.

10. Procédé de fabrication d'une gaine (1) telle que définie dans l'une quelconque des revendications 1 à 4, comprenant les étapes successives suivantes :
a) fourniture d'un corps tubulaire en matériau composite à matrice céramique pour former le corps tubulaire interne (4), par la mise en oeuvre des étapes successives suivantes :
- la réalisation d'une préforme fibreuse à base de fibres continues sur un élément support cylindrique ;
- l'application d'un traitement pour induire la consolidation de ladite préforme par formation d'une matrice dans la préforme, le traitement étant réalisé à une température qui est inférieure à la température de dégradation de la préforme et inférieure à la température de dégradation de l'élément support ;
- le retrait de l'élément support de la préforme consolidée par attaque chimique de la surface de contact du matériau de l'élément support avec la préforme consolidée ;
- la densification de la préforme consolidée réalisée à une température inférieure à la température de dégradation de la préforme consolidée ;
b) formation du corps tubulaire métallique (3) sur le corps tubulaire interne (4) ;
c) formation du corps tubulaire externe (2) sur le corps tubulaire métallique, par la mise en oeuvre des étapes successives suivantes :
- la réalisation d'une préforme fibreuse à base de fibres continues sur la surface externe du corps tubulaire métallique ;
- l'application d'un traitement pour induire la densification de la préforme par formation d'une matrice dans ladite préforme, le traitement étant réalisé à une température qui est inférieure à la température de dégradation de la préforme, inférieure à la température de dégradation du corps tubulaire métallique et inférieure à la température de dégradation du corps tubulaire interne.

11. Procédé de fabrication selon la revendication 10, dans lequel l'étape b) comprend le dépôt en phase vapeur d'une couche en métal ou en alliage de métaux sur la surface externe du corps tubulaire interne.

12. Procédé de fabrication selon la revendication 10, dans lequel l'étape b) comprend les étapes successives suivantes :
- l'insertion du corps tubulaire interne (4) dans un tube métallique en métal ou en alliage de métaux ;
- le plaquage de ce tube métallique sur la surface externe du corps tubulaire interne (4) ;
- le recuit éventuel de la pièce ainsi formée.

13. Procédé de fabrication selon la revendication 10, qui comprend en outre, entre les étapes a) et b), une étape de traitement de surface de la surface du corps tubulaire interne pour en réduire la rugosité.

14. Procédé de fabrication d'une structure tubulaire (10) telle que définie dans l'une quelconque des revendications 5 à 8, comprenant la fabrication d'une gaine (1) selon le procédé tel que défini dans l'une quelconque des revendications 10 à 13 et l'obturation de la ou des extrémités ouvertes de ladite gaine (1) par le placement d'un couvercle (7 ; 8) sur chacune de ces extrémités ouvertes et la fixation dudit couvercle sur le corps tubulaire métallique (1), chaque couvercle comprenant une couche interne en métal ou en alliage de métaux et éventuellement une couche supplémentaire en matériau composite à matrice céramique.

15. Procédé de fabrication selon la revendication 14, comprenant la mise en forme de la gaine de manière à ce qu'elle comporte, au niveau de chaque extrémité ouverte, une zone annulaire dans laquelle le corps tubulaire métallique n'est pas recouvert par le corps tubulaire externe, chaque zone annulaire étant totalement recouverte par la couche interne métallique d'un couvercle lors de la fixation d'un couvercle sur l'extrémité ouverte correspondant à ladite zone annulaire.

## Patentansprüche

1. Kernbrennstoffhülle (1) für einen Kernreaktor, die ein bis zwei offene Enden aufweist und eine Metallschicht umfasst, die einen metallischen Rohrkörper (3) bildet, sowie zwei Schichten aus Verbundmaterial mit Keramikmatrix, die den metallischen Rohrkörper bedecken, wobei eine der zwei Schichten aus Verbundmaterial mit Keramikmatrix die Innenoberfläche des metallischen Rohrkörpers bedeckt, um einen inneren Rohrkörper (4) zu bilden, wohingegen die andere der zwei Schichten aus Verbundmaterial mit Keramikmatrix die Außenoberfläche des metallischen Rohrkörpers bedeckt, um einen äußeren Rohrkörper (2) zu bilden, wobei der metallische Rohrkörper somit sandwichmäßig zwischen dem inneren und dem äußeren Rohrkörper eingefasst ist, wobei der metallische Rohrkörper eine mittlere Dicke hat, die kleiner ist als die mittleren Dicken des inneren und des äußeren Rohrkörpers.

2. Hülle nach Anspruch 1, wobei der metallische Rohrkörper (3) eine mittlere Dicke hat, die zwischen 5% und 20% der mittleren Dicke der Hülle enthalten ist.

3. Hülle nach Anspruch 1, wobei der metallische Rohrkörper (3) aus einem Material ist, das ausgewählt ist aus Niob und seinen Legierungen, Tantal und seinen Legierungen, Wolfram und seinen Legierungen, Titan und seinen Legierungen.

4. Hülle nach Anspruch 1, wobei der innere (4) und der äußere (2) Rohrkörper aus einem C_{F}/C-, C_{F}/SiC- oder SiC_{f}/SiC-Verbund sind.

5. Rohrstruktur (10), die einen geschlossenen Hohlraum aufweist, wobei die Struktur eine Hülle (1) wie in einem der Ansprüche 1 bis 4 definiert, sowie wenigstens einen Deckel (7; 8) für jedes offene Ende der Hülle umfasst, wobei jeder Deckel im Bereich eines offenen Endes derart positioniert ist, dass er das offene Ende vollständig verschließt, wobei jeder Deckel eine Innenschicht aus Metall oder aus einer Metalllegierung umfasst, die dazu ausgelegt ist, am metallischen Rohrkörper der Hülle befestigt zu sein, und gegebenenfalls eine zusätzlich Schicht aus Verbundmaterial mit Keramikmatrix, die dazu ausgelegt ist, am äußeren Rohrkörper der Hülle befestigt zu sein, wobei der geschlossene Hohlraum der Struktur durch eine Innenwand der Hülle und durch eine Innenwand jedes Deckels begrenzt ist.

6. Rohrstruktur (10) nach Anspruch 5, wobei die Hülle (1) im Bereich jedes offenen Endes eine ringförmige Zone umfasst, in der der metallische Rohrkörper nicht durch den äußeren Rohrkörper bedeckt ist, und wobei jeder Deckel mit einem Boden gebildet ist, der mit einem Seitenrand verbunden ist, wobei der Seitenrand dazu ausgelegt ist, die ringförmige Zone zu bedecken.

7. Rohrstruktur nach Anspruch 5 oder 6, wobei der geschlossene Hohlraum dazu ausgelegt ist, einen Kernbrennstoff zu enthalten sowie die Spaltungsgase, die durch den Kernbrennstoff unter Bestrahlung freigesetzt werden.

8. Rohrstruktur nach Anspruch 7, wobei der metallische Rohrkörper (3) der Hülle eine mittlere Dicke hat, die zwischen 50 und 200 Mikrometern enthalten ist.

9. Kernbrennstoffelement (100), umfassend Kernbrennstoff (5), der in dem geschlossenen Hohlraum einer Rohrstruktur (10) wie in einem der Ansprüche 5 bis 8 definiert untergebracht ist.

10. Verfahren zur Herstellung einer Hülle (1) wie in einem der Ansprüche 1 bis 4 definiert, umfassend die folgenden aufeinanderfolgenden Schritte:
a) Bereitstellen eines Rohrkörpers aus Verbundmaterial mit Keramikmatrix, um den inneren Rohrkörper (4) zu bilden, durch die Durchführung der folgenden aufeinanderfolgenden Schritte:
- Realisieren einer Faservorform auf Basis von kontinuierlichen Fasern auf einem zylindrischen Trägerelement;
- Anwenden einer Behandlung zum Bewirken der Verfestigung der Vorform durch Bilden einer Matrix in der Vorform, wobei die Behandlung bei einer Temperatur durchgeführt wird, die niedriger ist als die Zersetzungstemperatur der Vorform und niedriger als die Zersetzungstemperatur des Trägerelements;
- Entfernen des Trägerelements von der verfestigten Vorform durch chemisches Ätzen der Kontaktoberfläche des Materials des Trägerelements mit der verfestigten Vorform;
- Verdichten der verfestigten Vorform, realisiert bei einer Temperatur, die niedriger ist als die Zersetzungstemperatur der verfestigten Vorform;
b) Bilden des metallischen Rohrkörpers (3) auf dem inneren Rohrkörper (4);
c) Bilden des äußeren Rohrkörpers (2) auf dem metallischen Rohrkörper durch Durchführen der folgenden aufeinanderfolgenden Schritte:
- Realisieren einer Faservorform auf Basis von kontinuierlichen Fasern auf der Außenoberfläche des metallischen Rohrkörpers;
- Anwenden einer Behandlung zum Bewirken der Verdichtung der Vorform durch Bilden einer Matrix in der Vorform, wobei die Behandlung bei einer Temperatur durchgeführt wird, die niedriger ist als die Zersetzungstemperatur der Vorform, niedriger als die Zersetzungstemperatur des metallischen Rohrkörpers und niedriger als die Zersetzungstemperatur des inneren Rohrkörpers.

11. Verfahren zur Herstellung nach Anspruch 10, wobei der Schritt b) eine Gasphasenabscheidung einer Schicht aus Metall oder aus Metalllegierung auf der Außenoberfläche des inneren Rohrkörpers umfasst.

12. Verfahren zur Herstellung nach Anspruch 10, wobei der Schritt b) die folgenden aufeinanderfolgenden Schritte umfasst:
- Einsetzen des inneren Rohrkörpers (4) in ein Metallrohr aus Metall oder aus Metalllegierung;
- Plattieren dieses Metallrohrs auf der Außenoberfläche des inneren Rohrkörpers (4);
- gegebenenfalls Ausglühen des derart gebildeten Werkstücks.

13. Verfahren zur Herstellung nach Anspruch 10, das ferner zwischen den Schritten a) und b) einen Schritt der Oberflächenbehandlung der Oberfläche des inneren Rohrkörpers umfasst, um die Rauigkeit davon zu verringern.

14. Verfahren zur Herstellung einer Rohrstruktur wie in einem der Ansprüche 5 bis 8 definiert, umfassend die Herstellung einer Hülle (1) gemäß dem Verfahren wie in einem der Ansprüche 10 bis 13 definiert und das Verschließen des oder der offenen Endes/Enden der Hülle (1) durch die Platzierung eines Deckels (7; 8) auf jedes dieser offenen Enden und die Befestigung des Deckels auf dem metallischen Rohrkörper (1), wobei jeder Deckel eine innere Schicht aus Metall oder aus Metalllegierung umfasst sowie gegebenenfalls eine zusätzliche Schicht aus Verbundmaterial mit Keramikmatrix.

15. Verfahren zur Herstellung nach Anspruch 14, umfassend das Formen der Hülle derart, dass sie im Bereich jedes offenen Endes eine ringförmige Zone umfasst, in der der metallische Rohrkörper nicht durch den äußeren Rohrkörper bedeckt ist, wobei jede ringförmige Zone während der Befestigung eines Deckels an dem offenen Ende, das der ringförmigen Zone entspricht, vollständig durch die metallische Innenschicht eines Deckels bedeckt ist.

## Claims

1. A nuclear fuel cladding (1) for nuclear reactor having one to two open ends and comprising a metal layer forming a metal tubular body (3) and two layers of ceramic matrix composite material covering the metal tubular body, one of the two layers in ceramic matrix composite material covers the inner surface of the metal tubular body to form an inner tubular body (4), whilst the other of the two layers in ceramic matrix material covers the outer surface of the metal tubular body to form an outer tubular body (2), the metal tubular body therefore being sandwiched between the inner and outer tubular bodies, the metal tubular body having a smaller mean thickness than the mean thicknesses of the inner and outer tubular bodies.

2. The cladding according to claim 1, wherein the metal tubular body (3) has a mean thickness of between 5 % and 20 % of the mean thickness of the cladding.

3. The cladding according to claim 1, wherein the metal tubular body (3) is in a material chosen from among niobium and its alloys, tantalum and its alloys, tungsten and its alloys, titanium and its alloys.

4. The cladding according to claim 1, wherein the inner (4) and outer (2) tubular bodies are in C_{f}/C, C_{f}/SiC or SiC_{f}/SiC composite.

5. A tubular structure (10) having a closed cavity, the said structure comprising a cladding (1) such as defined in any of claims 1 to 4 and at least one cover (7; 8) for each open end of the cladding, each cover being positioned at an open end so as fully to seal the said open end, each cover comprising an inner layer in metal or metal alloy intended to be secured to the metal tubular body of the cladding, and optionally an additional layer in ceramic matrix composite material intended to be secured to the outer tubular body of the cladding, the closed cavity of the structure being delimited by an inner wall of the cladding and by an inner wall of each cover.

6. The tubular structure (10) according to claim 5, wherein the cladding (1), at each open end, comprises an annular region in which the metal tubular body is not covered by the outer tubular body and wherein each cover is formed of a bottom connected to a side edge, the said side edge being adapted to cover the said annular region.

7. The tubular structure according to claim 5 or 6, wherein the closed cavity is able to contain a nuclear fuel and the fission gases released by the said nuclear fuel when irradiated.

8. The tubular structure according to claim 7, wherein the metal tubular body (3) of the cladding has a mean thickness of between 50 and 200 micrometres.

9. A nuclear fuel element (100) comprising nuclear fuel (5) housed in the closed cavity of a tubular structure (10) such as defined in any of claims 5 to 8.

10. A process for manufacturing a cladding (1) such as defined in any of claims 1 to 4, comprising the following successive steps:
a) providing a tubular body in ceramic matrix composite material to form the inner tubular body (4), by implementation of the following successive steps:
- preparing a fibrous preform of continuous fibres on a cylindrical supporting element;
- applying treatment to cause consolidation of the said preform by forming a matrix in the preform, the treatment being conducted at a temperature lower than the degradation temperature of the preform and lower than the degradation temperature of the supporting element;
- removing the supporting element from the consolidated preform by chemical attack of the contact surface of the material of the supporting element with the consolidated preform;
- densifying the consolidated preform at a temperature lower than the degradation temperature of the consolidated preform;
b) forming the metal tubular body (3) on the inner tubular body (4);
c) forming the outer tubular body (2) on the metal tubular body by implementing the following successive steps:
- preparing a fibrous preform of continuous fibres on the outer surface of the metal tubular body;
- applying treatment to cause densification of the preform by forming a matrix in said preform, the treatment being conducted at a temperature which is lower than the degradation temperature of the preform, lower than the degradation temperature of the metal tubular body and lower than the degradation temperature of the inner tubular body.

11. The process for manufacturing a cladding according to claim 10, wherein step b) comprises the vapour phase depositing of a metal or metal alloy layer on the outer surface of the inner tubular body.

12. The process for manufacturing a cladding according to claim 10, wherein step b) comprises the following successive steps:
- inserting the inner tubular body (4) in a metal tube in metal or metal alloy;
- plating this metal tube onto the outer surface of the inner tubular body (4);
- optional annealing of the part thus formed.

13. The process for manufacturing a cladding according to claim 10, which further comprises, between steps a) and b), a surface treatment step of the surface of the inner tubular body to reduce the roughness thereof.

14. A process for manufacturing a tubular structure (10) such as defined in any of claims 5 to 8, comprising the manufacture of a cladding (1) following the process such as defined in any of claims 10 to 13 and the sealing of the open end(s) of the cladding (1) by placing a cover (7; 8) on each of these open ends and securing the said cover onto the metal tubular body (1), each cover comprising an inner layer in metal or metal alloy and optionally an additional layer in ceramic matrix composite material.

15. The process for manufacturing according to claim 14, comprising the forming of the cladding so that, at each open end, it comprises an annular region in which the metal tubular body is not covered by the outer tubular body, each annular region being fully covered by the metal inner layer of a cover when securing a cover onto the open end corresponding to the said annular region.
